# EUROPÄISCHE PATENTANMELDUNG

(11) **EP 0 545 506 A1**
(43) Veröffentlichungstag der Anmeldung: **09.06.1993**
(21) Anmeldenummer: 92250275.2
(22) Anmeldetag: 28.09.1992
(51) Int. Cl.: H01B 3/40

(54) **Giessharz**

(30) Priorität: 29.11.1991 DE 4139877
(71) Anmelder: SIEMENS AKTIENGESELLSCHAFT, D-80333 München (DE)
(72) Erfinder: Ihlein, Walter, W-1000 Berlin 19 (DE)

(57) **Zusammenfassung**

Zur Verwendung bei der Herstellung von Isolierstoffbauteilen für Hochspannungs-Schaltanlagen wurde ein Gießharz mit gutem Tracking-Verhalten entwickelt, das aus einem durch Molekülvergrößerung zu einem Epoxidäquivalent größer als 200 modifizierten ringepoxidierten cycloaliphatischen Epoxidharz auf der Basis von 3,4-Epoxycyclohexylmethyl-3,4-epoxycyclohexancarboxylat oder Bis(3,4-epoxycyclohexylmethyl)-adipat oder deren Mischung sowie einem Härter und Dolomit als Füllstoff besteht.

## Beschreibung

Die Erfindung bezieht sich auf ein Gießharz zur Verwendung bei der Herstellung von Isolierstoffbauteilen für Hochspannungs-Schaltanlagen.

Isolierstoffbauteile, insbesondere in Hochspannungs-Schaltanlagen sind z. T. wiederholter Lichtbogeneinwirkung ausgesetzt. Dabei sollen diese Isolierstoffbauteile, beispielsweise Isolierstoffstützer und Durchführungen, die eine hohe Durchschlagsfestigkeit mit einer hohen mechanischen Festigkeit verbinden, auch eine große Beständigkeit gegenüber Lichtbogeneinwirkungen aufweisen.

Für diese letztere Eigenschaft, die sogenannte "Tracking Resistance", d. h. die verminderte Kriechwegbildung, ist neben der Menge und Art des Füllstoffes vor allem die Harzmatrix der Isolierstoffe entscheidend.

Diese Eigenschaft soll aber auch - das gilt speziell für SF₆-isolierte Schaltanlagen - unter dem Einfluß der durch Lichtbogeneinwirkungen entstehenden Zersetzungsprodukte des SF₆ erhalten bleiben; in diesem Falle ist jedoch die Art des Füllstoffes von entscheidender Bedeutung.

In bezug auf die zuvor genannten Eigenschaften, insbesondere die "Tracking Resistance", ist einerseits eine Epoxidharzmatrix mit aromatischer Grundstruktur einer solchen mit nichtaromatischen Strukturen deutlich unterlegen, während andererseits unter den Füllstoffen z. B. Dolomit eine hervorragende Beständigkeit gegenüber den Zersetzungsprodukten des SF₆ aufweist.

Es hat sich aber gezeigt, daß die Kombination Von einem Epoxidharz mit nichtaromatischer Grundstruktur und Dolomit beträchtliche Probleme aufwirft:
Als Epoxid-Verbindungen mit nichtaromatischen Strukturen bieten sich hier die cycloaliphatischen Epoxidharze an, wobei sowohl ringepoxidierte als auch glycidylestergruppenhaltige Harze in Frage kommen. Ein gravierender Nachteil der auf dem Markt erhältlichen Harze dieser beiden Typen sind die unbefriedigenden mechanischen Eigenschaften der daraus hergestellten Gießharzformstoffe, sofern sie die Matrix eines mit Dolomit gefüllten Systems bilden. Es ist auch nicht erkennbar, daß durch die verschiedenen hier als Härter einsetzbaren Dicarbonsäureanhydride diese Eigenschaften stark verändert werden könnten.

Überhaupt erweist sich Dolomit als ein sehr schwierig zu handhabender Füllstoff in Epoxidharz-Säureanhydrid-Matrix-Systemen. Selbst die für ihre ausgezeichneten mechanischen Eigenschaften bekannten Matrixsysteme auf der Basis von flüssigen Bisphenol A- und Bisphenol F-Epoxidharzen mit den verschiedenen Dicarbonsäureanhydridhärtern erreichen mit Dolomit als Füllstoff nur mäßige mechanische Eigenschaften. Im Vergleich zu entsprechenden, z. B. mit Quarzmehl gefüllten Systemen zeigen Formstoffe mit Dolomit als Füllstoff einen Abfall um ca. 60% in so wichtigen mechanischen Eigenschaften wie Biegefestigkeit und Schlagzähigkeit.

Nur mit den nach dem "Advancement"-Verfahren (s. u.) hergestellten Epoxidharzen auf Bisphenol A-Basis, mit einem Epoxidäquivalent von ca. 400 und bestimmten festen Dicarbonsäureanhydridhärtern werden Formstoffe mit befriedigenden mechanischen Eigenschaften erhalten, deren Niveau ca. 30% unter dem vergleichbarer, z. B. mit Quarzmehl gefüllter Systeme liegt, dabei das Niveau von Dolomit-gefüllten Flüssigharzsystemen jedoch deutlich übertrifft.

Bedingt durch die besondere molekulare Struktur dieser Festharze wird in den mit Dolomit gefüllten Formstoffen bezüglich der mechanischen Eigenschaften ein Niveau erreicht, das es ermöglicht, diesen Füllstoff mit seinen hervorragenden Eigenschaften gegenüber SF₆-Zersetzungsprodukten in Isolierstoffbauteilen für SF₆-isolierte Schaltanlagen einzusetzen. Unbefriedigend ist jedoch, bedingt durch die aromatische Struktur dieser Harzmatrix, das Tracking-Verhalten.

Aufgabe der vorliegenden Erfindung ist deshalb die Entwicklung eines cycloaliphatischen Epoxidharzsystems, dessen Formstoffe in Verbindung mit Dolomit als Füllstoff sowohl eine erhöhte Lichtbogenbeständigkeit als auch ein mechanisches Eigenschaftsniveau erreichen, die den Einsatz dieser Formstoffe für Isolierbauteile in SF₆-isolierten Schaltanlagen ermöglichen. Auch müssen die Isolierstoffbauteile resistent gegenüber den durch Lichtbogeneinwirkung entstehenden SF₆-Zersetzungsprodukten sein.

Diese Aufgabe wird gemäß der Erfindung gelöst durch Verwendung eines Gießharzsystems, das aus einem durch Molekülvergrößerung zu einem Epoxidäquivalent größer als 200 modifizierten ringepoxidierten cycloaliphatischen Epoxidharz auf der Basis von 3,4-Epoxycyclohexylmethyl-3,4-epoxycyclohexancarboxylat oder Bis(3,4-epoxycyclohexylmethyl)-adipat oder einer Mischung dieser Stoffe sowie einem Härter und Dolomit als Füllstoff besteht.

Die Modifizierung beider Epoxidharze ist unbedingt notwendig, da ohne Molekülvergrößerung nicht die für Epoxidfestharze charakteristischen Eigenschaften wie verminderte Schwindung und hohes mechanischen Eigenschaftsniveau erreicht werden.

Dies gilt besonders bei der Verwendung von Dolomit als Füllstoffkomponente.

Um durch Molekülvergrößerung von den Grundstoffen 3,4-Epoxycyclohexylmethyl-3,4-epoxycyclohexancarboxylat und Bis (3,4-epoxycyclohexylmethyl)-adipat zu höherviskosen Verbindungen zu gelangen, bieten sich im wesentlichen folgende drei an sich bekannte Verfahren an:
1) ionische Polymerisation mit Hilfe eines entsprechenden Beschleunigers,
2) die Addition von Dicarbonsäureanhydriden oder Dicarbonsäuren im Unterschuß, wobei die Molekülvergrößerung unter Bildung von Estergruppen erfolgt,
3) die Addition von Diolen unter Bildung von Etherstrukturen (Advancement-Verfahren).
Leicht durchführbar ist insbesondere die Addition von aromatischen Diolen unter Bildung von Arylether-Strukturen.

Als vorteilhafte cycloaliphatische Epoxidfestharze erweisen sich dabei die nach dem Verfahren 3) aus der Umsetzung eines Diols mit den beiden obengenannten ringepoxidierten cycloaliphatischen Flüssigharzen erhaltenen Gießharzkomponenten.

Als besonders günstig erweist es sich, daß den Stoffen 3,4-Epoxycyclohexylmethyl-3,4-epoxycyclohexancarboxylat und Bis (3,4-epoxycyclohexylmethyl)-adipat zur Modifizierung eine solche Menge von Diolen zugegeben wird, daß die Additionsprodukte bezüglich 3,4-Epoxycyclohexylmethyl-3,4-epoxycyclohexancarboxylat ein Epoxidäquivalent etwa zwischen 200 und 300 und bezüglich Bis(3,4-epoxycyclohexylmethyl)-adipat ein Epoxidäquivalent etwa zwischen 300 und 500 erreichen.

Ein zugegebenes Diol kann vorteilhafterweise Bisphenol A sein.

Aus der PCT-Anmeldung WO 90/00802 sind derartige Verbindungen bereits bekannt und dienen dort als Bindemittel für Isolierbänder zur Isolierung von elektrischen Leitungen.

Es hat sich überrascherweise herausgestellt, das trotz des Gehaltes an aromatischen Strukturelementen (Bisphenol A) Formstoffe dieser beiden cycloaliphatischen Festharze und auch deren Mischungen mit einem festen cycloaliphatischen Dicarbonsäureanhydrid als Härterkomponente und Füllstoffen eine im Vergleich zu entsprechenden Epoxidfestharzen auf Bisphenol A-Basis deutlich verbesserte Lichtbogenbeständigkeit unter Beibehaltung sehr guter mechanischer Eigenschaften zeigen. Das gilt insbesondere für den Einsatz von Dolomit als Füllstoffkomponente (Tabelle 1).

Bei den als Härtern hier eingesetzten Dicarbonsäureanhydriden handelt es sich um Verbindungen wie Tetrahydrophthalsäureanhydrid, Methyltetrahydrophthalsäureanhydrid, Hexahydrophthalsäureanhydrid, Methylhexahydrophthalsäureanhydrid, Methylnadicanhydrid etc, die sowohl in reiner Form als auch in Mischungen untereinander und auch in Mischungen mit aus diesen Anhydriden und mono- sowie difunktionellen Alkoholen hergestellten Halbestern eingesetzt werden können. Als monofunktionelle Alkohole kommen Verbindungen wie z. B. Propanol und Butanol, aber auch langkettige Alkohole wie z. B. Decylalkohol etc. in Betracht, während bei den Diolen besonders ether- und estergruppenhaltige Verbindungen Verwendung finden, z. B. Polyethylen- oder Polypropylenglykole oder endständige OH-Gruppen-haltige Neopentylglykol-Sebacinsäurepolyester. Schließlich können auch Monocarbon- bzw. Dicarbonsäuren dem Anhydrid direkt beigemischt werden, bevorzugt sind hier Polyester mit endständigen Carboxylgruppen, z. B. carboxylgruppenhaltige Polyester aus Neopentylglykol und Sebacinsäure.

Als besonders vorteilhaft erweist sich dabei die Verwendung von Tetrahydrophthalsäureanhydrid oder einer Mischung aus Tetrahydrophthalsäureanhydrid (THPSA) und THB, wobei THB das Umsetzungsprodukt aus THPSA und n-Butanol im Molverhältnis 1:1 ist.

Aromatische Dicarbonsäureanhydride wie z. B. Phthalsäureanhydrid, Trimellitsäureanhydrid etc sind aufgrund ihrer aromatischen Strukturelemente für lichtbogenbeständige Matrixsysteme als Härter weniger geeignet.

Die Härtungsreaktion kann, bestimmt durch die Herstellungsbedingungen mit oder ohne Beschleuniger durchgeführt werden, wobei die aus der Epoxidharz-Chemie bekannten Beschleunigergruppen eingesetzt werden können.

In der nachfolgenden Tabelle 1 sind die mit dem Tracking-Verhalten korrespondierenden Werte für die Lichtbogenimpuls- und Lichtbogendauerbeständigkeit dreier Formstoffe des erfindungsgemäßen Typs (A, B, C) im Vergleich mit den Werten eines bekannten Formstoffes auf der Basis eines Bisphenol A-Epoxidfestharzes (D) in relativen Einheiten dargestellt.

**Tabelle 1**

| | **Formstoff** | | | |
|---|---|---|---|---|
| | A | B | C | D |
| Lichtbogenimpulsbeständigkeit | 0,15 | 0,16 | 0,14 | 0,06 |
| Lichtbogendauerbeständigkeit | > 4,5 | 4,7 | 4,8 | 2,5 |

Formstoff A: Bisphenol A-modifiziertes 3,4-Epoxycyclohexylmethyl-3,4-epoxycyclohexancarboxylat (Epoxidäquivalent 265), THPSA (Tetrahydrophthalsäureanhydrid) als Härter und Dolomit als Füllstoff (Gewichtsteile 100:50:235).

Formstoff B: Mischung aus cycloaliphatischem Festharz des Formstoffes A und Bisphenol A-modifiziertem Bis(3,4-epoxydcyclohexylmethyl)-adipat (Epoxidäquivalent 455) im Gewichtsverhältnis 1:3, THPSA als Härter und Dolomit als Füllstoff (Gewichtsteile 100:38:235).

Formstoff C:
Festharz des Formstoffes A, THPSA und THB als Härter und Dolomit als Füllstoff, (Gewichtsteile: 100:47 : 16:260). THB: Umsetzungsprodukt aus THPSA und n-Butanol im Molverhältnis 1:1.

Formstoff D:
Bisphenol A-Festharz (Epoxidäquivalent ca. 400), Mischungen aus THPSA und PSA Phtalsäureantydrid im Gewichtsverhältnis von 2:1 und Dolomit (Gewichtsteile 100:38,5:235).

## Patentansprüche

1. Gießharz zur Verwendung bei der Herstellung von Isolierstoffbauteilen für Hochspannungs-Schaltanlagen, das aus einem durch Molekülvergrößerung zu einem Epoxidäquivalent größer als 200 modifizierten ringepoxidierten cycloaliphatischen Epoxidharz auf der Basis von 3,4-Epoxycyclohexylmethyl-3,4-epoxycyclohexancarboxylat oder Bis(3,4-epoxycyclohexylmethyl)-adipat oder einer Mischung dieser Stoffe sowie einem Härter und Dolomit als Füllstoff besteht.

2. Gießharz zur Verwendung nach Anspruch 1 ,
**dadurch gekennzeichnet,**
daß den Stoffen 3,4-Epoxycyclohexylmethyl-3,4-epoxycyclohexancarboxylat und Bis(3,4-epoxycyclohexylmethyl)-adipat zur Modifizierung eine solche Menge von Diolen zugegeben wird, daß die Additionsprodukte bezüglich 3,4-Epoxycyclohexylmethyl-3,4-epoxycyclohexancarboxylat ein Epoxidäquivalent etwa zwischen 200 und 300 und bezüglich Bis(3,4-epoxycyclohexylmethyl)-adipat ein Epoxidäquivalent etwa zwischen 300 und 500 erreichen.

3. Gießharz zur Verwendung nach Anspruch 2,
**dadurch gekennzeichnet,** daß ein zugegebenes Diol Bisphenol A ist.

4. Gießharz zur Verwendung nach Anspruch 1 oder einem der folgenden, **dadurch gekennzeichnet,**
daß als Härter ein fester cycloaliphatischer Dicarbonsäureanhydridhärter verwendet wird.

5. Gießharz zur Verwendung nach Anspruch 4,
**dadurch gekennzeichnet,** als Härter Tetrahydrophthalsäureanhydrid eingesetzt wird.

6. Gießharz zur Verwendung nach Anspruch 4,
**dadurch gekennzeichnet,** daß als Härter eine Mischung aus Tetrahydrophthalsäureanhydrid (THPSA) und dem Halbester aus n-Butanol und THPSA eingesetzt wird.
